# EUROPÄISCHE PATENTANMELDUNG

(11) **EP 1 478 071 A2**
(43) Veröffentlichungstag der Anmeldung: **17.11.2004**
(21) Anmeldenummer: 04101596.7
(22) Anmeldetag: 19.04.2004
(51) Int. Cl.: H02H 7/08

(54) **Verfahren zur Überwachung einer Leistungsendstufe**

(30) Priorität: 16.05.2003 DE 10322195
(71) Anmelder: SIEMENS AKTIENGESELLSCHAFT, 80333 München (DE)
(72) Erfinder: Henninger, Michael, 65779, Kelkheim (DE)

(57) **Zusammenfassung**

Bei einem Verfahren zur Überwachung einer Leistungsendstufe, die mindestens eine aus einer Reihenschaltung eines oberen und eines unteren Halbleiterschalters bestehende Halbbrücke aufweist, wobei die Halbleiterschalter durch pulsbreitenmodulierte Impulse abwechselnd in einen leitenden Zustand und einen nichtleitenden Zustand steuerbar sind, ist vorgesehen, dass jeweils bei leitendem oberen Halbleiterschalter und bei leitendem unteren Halbleiterschalter jeweils die Spannung über dem unteren Halbleiterschalter gemessen wird, dass die Differenz zwischen der Betriebsspannung und der bei leitendem oberen Halbleiterschalter über dem unteren Halbleiterschalter gemessenen Spannung gebildet wird, dass die Differenz und die bei leitendem unteren Halbleiterschalter über dem unteren Halbleiterschalter gemessene Spannung mit einer vorgegebenen maximal an einem leitenden Halbleiterschalter zulässigen Spannung verglichen werden und dass die Leistungsendstufe oder ihr Ausgangskreis als fehlerhaft erkannt wird, wenn die Differenz und die am unteren Halbleiterschalter gemessene Spannung jeweils größer als die vorgegebene Spannung sind.

## Beschreibung

Die Erfindung betrifft ein Verfahren zur Überwachung einer Leistungsendstufe, wobei die Leistungsendstufe mindestens eine aus einer Reihenschaltung eines oberen und eines unteren Halbleiterschalters bestehende und mit Betriebsspannung beaufschlagte Halbbrücke aufweist, wobei die Halbleiterschalter durch pulsbreitenmodulierte Impulse abwechselnd in einen leitenden Zustand und einen nichtleitenden Zustand steuerbar sind und wobei der Verbindungspunkt der Halbleiterschalter der mindestens einen Halbbrücke einen Ausgang bildet.

Mit Halbleiterschaltern bestückte Leistungsendstufen werden unter anderem in Kraftfahrzeugen zur Ansteuerung von Verbrauchern, beispielsweise Gleichstrommotoren, verwendet. Insbesondere, wenn mit Hilfe der Leistungsendstufen und der Motoren sicherheitsrelevante Funktionen ausgeführt werden, ist eine Überprüfung der Leistungsendstufen auf korrekte Funktion der Halbleiterschalter, auf Kurzschluss und Überlastung besonders wichtig.

Diese Aufgabe wird mit dem erfindungsgemäßen Verfahren dadurch gelöst, dass jeweils bei leitendem oberen Halbleiterschalter und bei leitendem unteren Halbleiterschalter jeweils die Spannung über dem unteren Halbleiterschalter gemessen wird, dass die Differenz zwischen der Betriebsspannung und der bei leitendem oberen Halbleiterschalter über dem unteren Halbleiterschalter gemessenen Spannung gebildet wird, dass die Differenz und die bei leitendem unteren Halbleiterschalter über dem unteren Halbleiterschalter gemessene Spannung mit einer vorgegebenen maximal an einem leitenden Halbleiterschalter zulässigen Spannung verglichen werden und dass die Leistungsendstufe oder ihr Ausgangskreis als fehlerhaft erkannt wird, wenn die Differenz und die am unteren Halbleiterschalter gemessene Spannung jeweils größer als die vorgegebene Spannung sind.

Das erfindungsgemäße Verfahren ermöglicht eine Überprüfung der Leistungsendstufe während des normalen Betriebes. Außerdem hat das erfindungsgemäße Verfahren den Vorteil, dass im Zusammenhang mit Steuereinrichtungen, welche die pulsbreitenmodulierten Impulse erzeugen, die Messung, die Differenzbildung sowie der Vergleich der Spannungen in einfacher Weise mit Hilfe von Analog/Digital-Wandlern und geeigneten Programmen oder dem Analog/Digital-Wandler nachgeschalteter Hardware zur Auswertung möglich sind.

Eine vorteilhafte Ausgestaltung des erfindungsgemäßen Verfahrens besteht darin, dass die Messungen der Spannung jeweils in einem mittleren Bereich der leitenden Intervalle erfolgen. Hiermit können Fehlmessungen durch an den Flanken der Impulse auftretende Einschwingvorgänge vermieden werden.

Das erfindungsgemäße Verfahren kann an Leistungsendstufen mit einer oder mehreren Halbbrücken durchgeführt werden. Eine andere vorteilhafte Ausgestaltung besteht darin, dass bei einer aus mindestens zwei Halbbrücken bestehenden Leistungsendstufe die Messungen der Spannung über den unteren Halbleiterschalter zu einem ersten Zeitpunkt erfolgen, wenn alle unteren Halbleiterschalter leitend sind, und zu einem zweiten Zeitpunkt erfolgen, wenn alle oberen Halbleiterschalter leitend sind.

Das erfindungsgemäße Verfahren kann derart durchgeführt werden, dass der erste und der zweite Zeitpunkt innerhalb der gleichen Periode der Impulse liegen. Wenn es jedoch beispielsweise aus Gründen der Signalverarbeitung günstiger sein sollte, kann auch vorgesehen sein, dass der zweite Zeitpunkt in einer anderen Periode der Impulse als der erste Zeitpunkt liegt.

Bei vielen Anwendungsfällen des erfindungsgemäßen Verfahrens kann die vorgegebene Spannung fest eingestellt sein und auch für alle Halbleiterschalter gleich gewählt werden. Es ist jedoch im Rahmen der Erfindung nicht ausgeschlossen, die Spannung für die Halbleiterschalter oder für einzelne Gruppen der Halbleiterschalter individuell vorzugeben. Da der Durchlasswiderstand R_DSon der Halbleiterschalter und damit auch die bei gegebenem Strom am Halbleiterschalter abfallende Spannung temperaturabhängig sind, kann gemäß einer Weiterbildung der Erfindung die vorgegebene Spannung als Funktion der Temperatur der Halbleiterschalter gesteuert werden.

Um Zerstörungen bzw. weitere Schäden zu vermeiden, kann bei dem erfindungsgemäßen Verfahren vorgesehen sein, dass eine Abschaltung der Leistungsendstufe erfolgt, wenn die Leistungsendstufe oder ihr Ausgangskreis als fehlerhaft erkannt wird. Es sind jedoch auch andere Reaktionen möglich, wie beispielsweise ein Warnsignal oder die Eingabe des Ereignisses in einen Wartungsspeicher.

Die Erfindung lässt zahlreiche Ausführungsformen zu. Eine davon ist schematisch in der Zeichnung anhand mehrerer Figuren dargestellt und nachfolgend beschrieben. Es zeigt:
Fig. 1 ein Schaltbild einer Anordnung zur Durchführung des erfindungsgemäßen Verfahrens,
Fig. 2 ein Diagramm verschiedener Impulse beim Ausführungsbeispiel nach Fig. 1,
Fig. 3 eine B6-Brückenschaltung während des leitenden Intervalls der oberen Halbleiterschalter und
Fig. 4 die gleiche Brückenschaltung während des leitenden Intervalls der unteren Halbleiterschalter.

Bei dem dargestellten Ausführungsbeispiel bilden zwei MOSFETs Hu, Lu; Hv, Lv; Hw, Lw jeweils eine Halbbrücke 7, 8, 9 mit Ausgängen 10, 11, 12, an die jeweils eine der in Sternschaltung ausgeführten Wicklungen 13, 14, 15 eines bürstenlosen permanent erregten Synchronmotors angeschlossen ist. Einem Eingang 16 wird die Betriebsspannung Ub zugeführt.

Die Anordnung umfasst ferner eine Steuereinrichtung 20, die als solche im Zusammenhang mit Leistungsendstufen bekannt ist, von einem Mikrocomputer oder einem digitalen Signalprozessor gebildet wird und als solche zum Verständnis der Erfindung nicht näher erläutert zu werden braucht. Ausgänge der Steuereinrichtung 20 sind mit einer Ansteuerschaltung 21 verbunden, welche Steuersignale für die MOSFETs Hu bis Lw erzeugt. Mit der Steuereinrichtung 20 sind ferner Analog/Digital-Wandler 20' verbunden, deren Eingängen von jeweils einem Spannungsteiler 22, 23, 24, 25 erzeugte Spannungen zuführbar sind. Die Spannungsteiler weisen wesentlich höhere Widerstandswerte als die Wicklungen 13, 14, 15 auf, um den Wirkungsgrad der Endstufe im Betrieb nicht zu verschlechtern.

Die Spannungsteiler 22 bis 25 sind derart ausgelegt, dass bei dem höchst möglichen Wert von U+ die zulässige Eingangsspannung des Analog/Digital-Wandlers nicht überschritten wird.

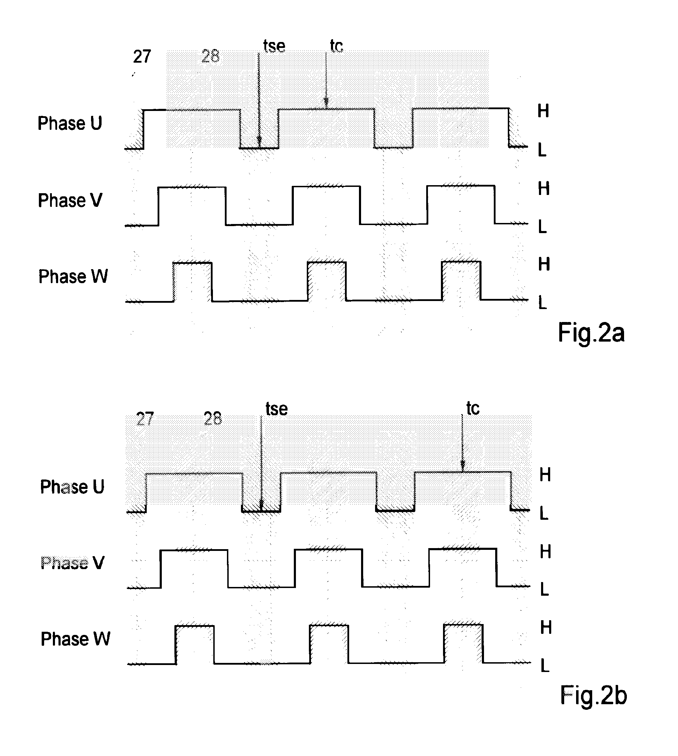

Fig. 2 zeigt die Ansteuerung der Halbleiterschalter, welche die drei Phasen U, V, W bilden derart, dass bei einem Pegel H der jeweils obere Halbleiterschalter leitend ist, während bei einem Pegel L der untere Halbleiterschalter in den leitenden Zustand gesteuert wird. Es sind jeweils drei Perioden dargestellt, deren Dauer, beispielsweise 50 µs beträgt, was einer Frequenz von 20 kHz entspricht. Da diese Frequenz wesentlich größer als diejenige des Drehfeldes ist, ist aus Fig. 2 die das Drehfeld bildende Breitenmodulation nicht erkennbar. Fig. 2 stellt insoweit eine Momentaufnahme dar, bei welcher das Intervall des Pegels H in der Phase U am größten und in der Phase W am kleinsten ist, während das Intervall des Pegels L in der Phase U am kleinsten und in der Phase W am größten ist.

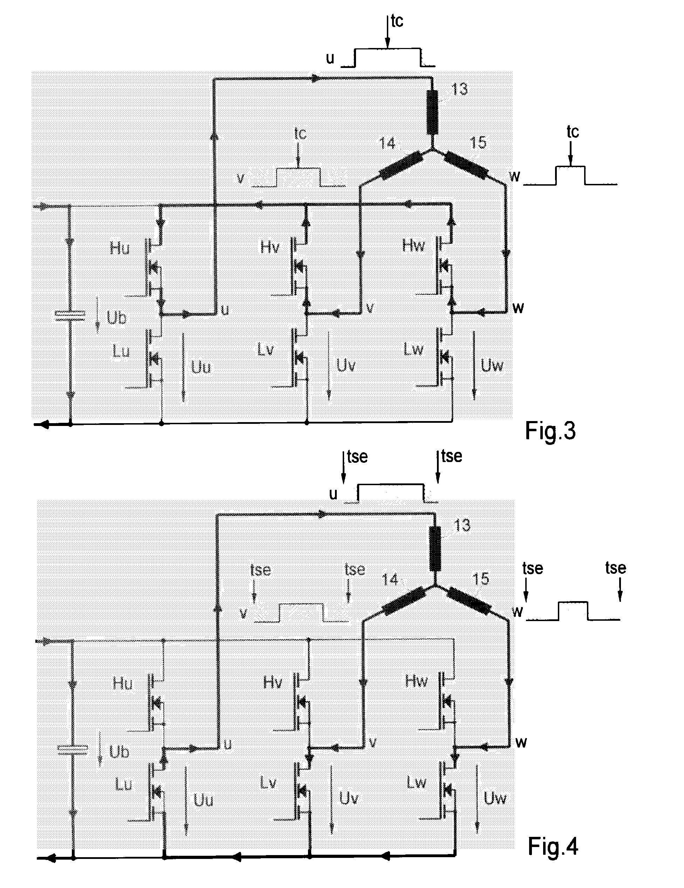

Die schraffierten Flächen 27, 28 stellen somit Zeiträume dar, in denen einerseits alle unteren Halbleiterschalter leitend sind (siehe auch Fig. 4) und andererseits alle oberen Halbleiterschalter leitend sind (siehe auch Fig. 3). Die Messungen erfolgen zu den in Fig. 2 gekennzeichneten Zeiten tse und tc, nämlich am Anfang bzw. Ende und in der Mitte einer Periode. Die in die Figuren 2a und 2b dargestellten Ausführungsbeispiele unterscheiden sich dadurch, dass der Zeitpunkt tc im Falle von Fig. 2a in der gleichen Periode liegt, während im Falle von Fig. 2b tc in der auf die Periode mit der Messung bei tse folgenden Periode liegt.

Fig. 3 zeigt den Zustand der Leistungsendstufe, während die oberen Halbleiterschalter Hu, Hv und Hw leitend sind. Diejenigen Leiter, in denen Strom fließt, sind hervorgehoben dargestellt. Die Stromrichtung ist durch Pfeile gekennzeichnet. Während des dargestellten Zeitraums liegt keine Betriebsspannung an den Wicklungen an. Der Stromfluss erfolgt durch die in den Wicklungen gespeicherte magnetische Energie. Bei tc werden die Spannungen Uu, Uv und Uw sowie die Betriebsspannung Ub gemessen.

In Fig. 4 sind Ströme und Spannungen dargestellt, wenn die unteren Halbleiterschalter Lu, Lv und Lw leitend sind. Während dieser Zeit wird zum Zeitpunkt tse die Messung von Uu, Uv und Uw vorgenommen.

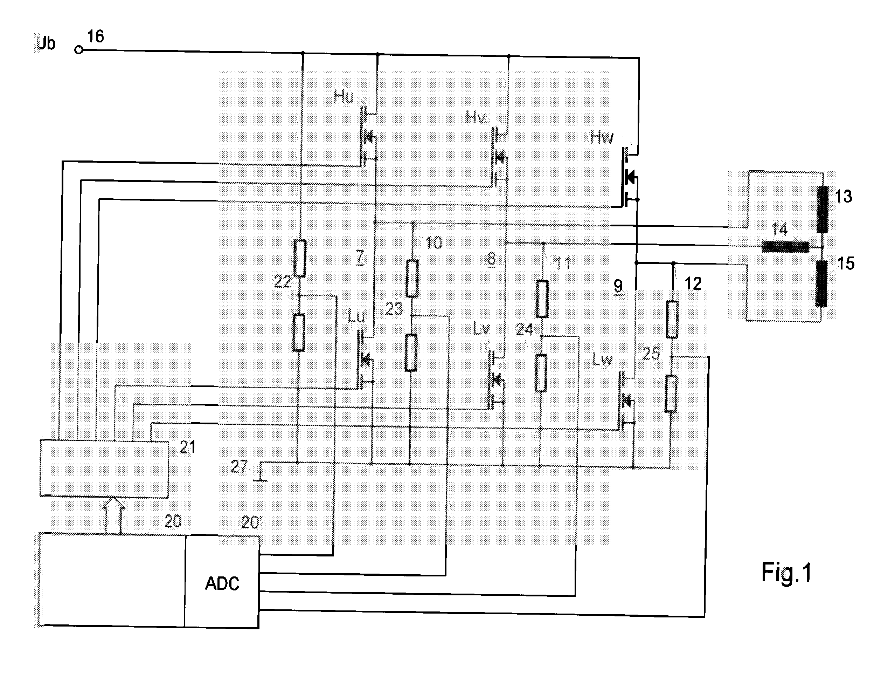

In dem Steuergerät 20 (Fig. 1) werden dann folgende Bewertungen durchgeführt, und zwar für die Messungen zum Zeitpunkt tc:
Ub-Uu(tc) < U_DSmax
Ub-Uv(tc) < U_DSmax
Ub-Uw(tc) < U_DSmax
und zum Zeitpunkt tse:
Uu(tse) < U_DSmax
Uv(tse) < U_DSmax
Uw(tse) < U_DSmax

Erreicht oder überschreitet eine der Differenzen oder eine der gemessenen Spannungen die vorgegebene Spannung U_DSmax, so liegt ein Fehler vor. Stellt einer der Halbleiterschalter einen Kurzschluss dar oder ist beispielsweise eine Motorzuleitung nach Masse oder Betriebsspannung kurzgeschlossen, fließt ein unzulässig hoher Strom, der einen erhöhten Spannungsabfall über dem entsprechenden Halbleiterschalter hervorruft. Diese Information wird zur Fehlererkennung und zum Abschalten genutzt.

## Patentansprüche

1. Verfahren zur Überwachung einer Leistungsendstufe, wobei die Leistungsendstufe mindestens eine aus einer Reihenschaltung eines oberen und eines unteren Halbleiterschalters bestehende und mit Betriebsspannung beaufschlagte Halbbrücke aufweist, wobei die Halbleiterschalter durch pulsbreitenmodulierte Impulse abwechselnd in einen leitenden Zustand und einen nichtleitenden Zustand steuerbar sind und wobei der Verbindungspunkt der Halbleiterschalter der mindestens einen Halbbrücke einen Ausgang bildet, **dadurch gekennzeichnet, dass** jeweils bei leitendem oberen Halbleiterschalter und bei leitendem unteren Halbleiterschalter jeweils die Spannung über dem unteren Halbleiterschalter gemessen wird, dass die Differenz zwischen der Betriebsspannung und der bei leitendem oberen Halbleiterschalter über dem unteren Halbleiterschalter gemessenen Spannung gebildet wird, dass die Differenz und die bei leitendem unteren Halbleiterschalter über dem unteren Halbleiterschalter gemessene Spannung mit einer vorgegebenen maximal an einem leitenden Halbleiterschalter zulässigen Spannung verglichen werden und dass die Leistungsendstufe oder ihr Ausgangskreis als fehlerhaft erkannt wird, wenn die Differenz und die am unteren Halbleiterschalter gemessene Spannung jeweils größer als die vorgegebene Spannung sind.

2. Verfahren nach Anspruch 1, **dadurch gekennzeichnet, dass** die Messungen der Spannung jeweils in einem mittleren Bereich der leitenden Intervalle erfolgen.

3. Verfahren nach einem der Ansprüche 1 oder 2, **dadurch gekennzeichnet, dass** bei einer aus mindestens zwei Halbbrücken bestehenden Leistungsendstufe die Messungen der Spannung über den unteren Halbleiterschalter zu einem ersten Zeitpunkt erfolgen, wenn alle unteren Halbleiterschalter leitend sind, und zu einem zweiten Zeitpunkt erfolgen, wenn alle oberen Halbleiterschalter leitend sind.

4. Verfahren nach Anspruch 3, **dadurch gekennzeichnet, dass** der erste und der zweite Zeitpunkt innerhalb der gleichen Periode der Impulse liegen.

5. Verfahren nach Anspruch 3, **dadurch gekennzeichnet, dass** der zweite Zeitpunkt in einer anderen Periode der Impulse als der erste Zeitpunkt liegt.

6. Verfahren nach einem der vorhergehenden Ansprüche, **dadurch gekennzeichnet, dass** die vorgegebene Spannung als Funktion der Temperatur der Halbleiterschalter gesteuert wird.

7. Verfahren nach einem der vorhergehenden Ansprüche, **dadurch gekennzeichnet, dass** eine Abschaltung der Leistungsendstufe erfolgt, wenn die Leistungsendstufe oder ihr Ausgangskreis als fehlerhaft erkannt wird.
